# EUROPEAN PATENT SPECIFICATION

(11) **EP 2 205 479 B1**
(45) Date of publication and mention of the grant of the patent: **25.05.2016**
(21) Application number: 08852708.0
(22) Date of filing: 07.08.2008
(51) Int. Cl.: B62D 25/10, B60K 13/06

(54) **BONNET WITH INTEGRATED AIR DUCT**
HAUBE MIT INTEGRIERTEM LUFTKANAL
CAPOT À CONDUITE D'AIR INTÉGRÉE

(30) Priority: 08.08.2007 IN MU15272007
(43) Date of publication of application: 14.07.2010
(73) Proprietor: Mahindra & Mahindra Ltd., Maharashtra (IN)
(72) Inventor: RAY, Alok, Kumar, Nashik 422 007 Maharashtra (IN); KALAMBI, Chandrashekhar, Vasant, Nashik 422 007 Maharashtra (IN); KHAN, Parvej, Alam, Majhar, Nashik 422 007 Maharashtra (IN); PATIL, Sandeep, Mahavir, Nashik 422 007 Maharashtra (IN)
(74) Representative: Rössig, Rolf
(86) International application number: PCT/IN2008/000491
(87) International publication number: WO 2009/066314

(56) References cited:
- US-A- 4 385 549
- US-A- 6 056 075
- US-A1- 2002 088 656
- US-B1- 6 302 228
- US-B1- 6 398 286
- US-B2- 6 988 574

## Description

The present innovation relates to a bonnet of a vehicle according to the precharacterizing portion of claim 1. More particularly, the present invention relates to a bonnet encompassing an integral air duct to provide air to the intercooler of the engine / engine or any device which requires air for its functioning.

US 6,056,075 A1 discloses a bonnet for a vehicle corresponding to the bonnet mentioned above.

US 2002/0088656 A1 discloses an air intake system for a vehicle, having a hood that defines at least one intake aperture therethrough. The hood may be configured such that the intake apertures have substantially zero exposed area in the upper surface of the hood, such that debris cannot fall from directly above the hood into the intake apertures. A screen is engaged with the hood. The screen may define at least one screen aperture therethrough. A screen mount may be disposed within the screen aperture, and is engaged with the lower surface of the hood and with the screen. The air flow path may be shaped such that air must rise near the intake apertures and fall near the outflow aperture. The air intake system may include an air plenum adapted to supply air to an engine.

US 4,385,549 discloses a ventilating device for an automobile which is formed in combination with the hood and the front fenders. An air inlet gap is disposed between the hood and the fender on each side of the automobile and extends laterally therealong. Conduits are disposed above the wheel arches of the automobile and support the hood. Air inlet openings in the conduits provide fluid communication with the air gaps. A transverse conduit joins the lateral conduits and is connected to air outlets disposed in the dashboard in the passenger compartment.

An intercooler, in turbocharged and supercharged internal combustion engines requires air to provide a denser intake charge to the engine and allows more air and fuel to be combusted per engine cycle, increasing the output of the engine. This air requirement is fulfilled with a duct running between front opening at grille and intercooler. Kia Carens, Nissan Xtrial and Tata Indigo are the well-known carmakers who have provided a separate plastic duct under the bonnet, which carry airflow from front of engine to intercooler of engine.

High torque generates high heat loads to the point where cooling of manual gearbox transmissions is necessary, transmission coolers are often provided by the vehicle manufacturer.

Car models of Nissan X-Trail and Tata Indigo have an intercooler mounted on the engine over its top-most part and just under the vehicle bonnet (or hood). There is a fairly large hollow plastic part, which is fastened to the underside of the bonnet forming a duct. The front portion of this duct is either a single opening or split into two openings and in the bonnet-closed condition is positioned in front of the front grille. The rear portion carries a seal, which seats over the top of the intercooler and overall forms a conduit for the cooling air. The bonnet of the Audi car has a noise insulator, fastened to the underside of the bonnet. This insulator is shaped to provide an air passage to the engine intercooler. Lamborghini car has front bumper with integrated air-intake for the front mounted oil cooler.

Other than these concepts, in the public domain, no patents relating to the present invention were found to the best of the knowledge of the applicant.

It is an object of the present invention to create a passage for the unobstructed flow of air to the intercooler of the engine from the outside through front grill, when the vehicle is in motion, to eliminate use of additional part like plastic etc for the purpose, and to utilize space under the bonnet effectively.

According to the present invention, this object is achieved by a an engine compartment of a vehicle accordning to claim 1.

### Advantages of the Present Invention:

1) Aerodynamic benefits - utilizes air dragged in for intercooling purposes.
2) Reduction in number of parts by combining both bonnet and snorkel that is made up of metal.
3) The weight of the bonnet is reduced.. 4) Absorbs engine noise, vibration and buffeting due to airflow.

### Brief description of figures:

- Figure 1: shows exploded view of bonnet with integrated air duct according to the present invention,

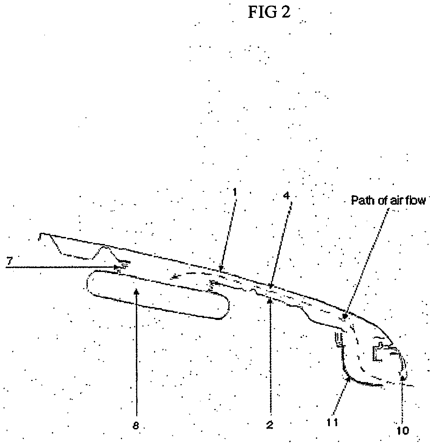

- Figure 2: shows cross the sectional side view of bonnet with air duct and path of the airflow in the bonnet according to present invention.

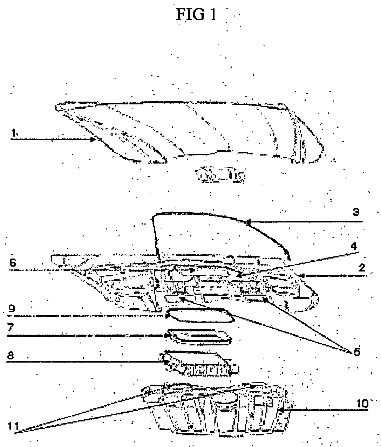

The bonnet-outer surface (1) is made of sheet metal. The reinforcing structure (2) is at the inner side of the bonnet and joined with the bonnet at its edges mechanically. Oven hardening sealant is provided at the central portion at the joint of outer and inner surface of the bonnet. The reinforcing structure is formed to provide a hollow space (3) as shown in figure 1. The leading end of this hollow space is split up into two slots (4), The trailing end of hollow space opens as a single square (5) on the upper side of the intercooler (7). The bottom of this trailing square opening is fitted with a flexible rubber bej low (6) which provides a continuous passage for air as well as a seal. The intercooler, a separate part (7), has a cover (8) mounted above it and it acts as a seat for flexible rubber bellow (6). The front two slots of the air duct (snorkel) open out into the front grille (9) which carries two curved air guides (10), which in turn face the on-rushing air stream. The normal functions of a conventional bonnet are static / passive in nature and it remains in its place after being closed. Dn closing the bonnet (1), the trailing square opening (5). of the reinforcing structure (2) get connected to the intercooler. (7) through its cover (8) and flexible rubber bellow (6). The front opening slots (4) of the reinforcement structure (2) of the bonnet panel (1) gets connected to the two air guides (10). This creates a complete leak proof air-conveying duct (snorkel) from the front of the vehicle leading to the intercooler core.

As the vehicle moves forward, it displaces the air in front of it. A part of the displaced air is drawn into this air passage and directed over the intercooler core. This cooling air enters over the top face of the intercooler core and exits from its bottom and into the engine compartment and then onwards into the air stream passing from the underbody of the vehicle. The mass flow rate of the air increases with the forward velocity of the vehicle. In the event of a frontal collision with a stationary object or moving vehicle, reinforcement structure folds and collapses and thus absorbs a portion of the impact energy,. When the vehicle is running under various operating conditions, there are varied noise and vibration inputs due to the running engine, road inputs and airflow. The bonnet, by virtue of its design with air duct integrated within it, damps the noise emanating from the engine compartment. Its structure also absorbs the vibration inputs and does not give off any of its own noise due to this vibration as tested with CFD (Computational Fluid Dynamics) analysis.

The quantity of air passing through the bonnet is a function of the. overall pressure drop across the entire system. The geometry of air guides, coefficient of friction, inner height of the air duct (space between the bonnet and reinforcement structure)^ drag coefficient, length of the snorkel and surface area of intercooler core are the parameters which are considered to achieve effective design of the present invention.

## Claims

1. An engine compartment of a vehicle having a bonnet an intercooler and a front grill,
said bonnet comprising:
- a main body (1) having an outside surface,
- a reinforcement structure (2)
- said main body (1) and said reinforcement structure (2) forming a hollow passage (3),
- said hollow passage (3) performing as an integrated air duct in the bonnet thereby extending from front of the vehicle structure up to the top of an intercooler (7), an engine or any device requiring air for its normal functioning,
- an opening at a front of the bonnet, said opening performing as an inlet for introducing outside air via said front grill to the intercooler area, engine intake and likewise, **characterized in that**
- said integrated air duct having a leading end split up into two slots (4) and a trailing end as a single square (5),
- the bonnet outer side is made of sheet metal,
- the bottom side of the trailing square opening is fitted with a flexible rubber bellow (6) which provides continuous passage for air as well as a seal,
- the intercooler has a cover (8) mounted above it and acts as a seat for said flexible rubber bellow (6),
- the two front slots of the air duct open into the front grill (9)
- and said front grill carries two curved air guides (10) which in turn face the on-rushing air stream.

2. A bonnet with integrated air duct as claimed in claim 1, wherein the main body (1) and the reinforcement structure (2) are fabricated in metal

3. A bonnet with integrated air duct as claimed in claim 1, wherein the main body (1) and the reinforcement structure (2) are fabricated from reinforced plastics

4. A bonnet with integrated air duct as claimed in claim 1, wherein the main body (1) and the reinforcement structure (2) are fabricated of composite material

5. A bonnet with integrated air duct as claimed in claim 1, wherein the main body (1) and the reinforcement structure (2) are fabricated or by any combination of the materials of claims 2, 3 and 4.

## Patentansprüche

1. Motorraum eines Fahrzeugs mit einer Haube, einem Ladeluftkühler und einem Kühlergrill,
wobei die Haube folgendes umfasst:
- einen Körper (1) mit einer Außenfläche,
- eine Verstärkungsstruktur (2)
- wobei der Körper (1) und die Verstärkungsstruktur (2) einen hohlen Durchgang (3) bilden,
- wobei der hohle Durchgang (3) als integrierter Luftkanal in der Haube wirkt und von der Vorderseite der Fahrzeugstruktur bis zur Spitze eines Ladeluftkühlers (7), eines Motors oder einer beliebigen anderen Vorrichtung verläuft, die Luft für ihr normales Funktionieren benötigt,
- eine Öffnung an einer Vorderseite der Haube, wobei die Öffnung als Einlass zur Einführung von Außenluft durch den Kühlergrill in den Ladeluftkühlerbereich,
Motoreinlass und Ähnliches wirkt,
**gekennzeichnet dadurch, dass**
- der integrierte Luftkanal ein vorderes Ende umfasst, das in zwei Schlitze (4) unterteilt ist, und ein hinteres Ende, das ein Quadrat (5) bildet,
- die Haubenaußenseite aus Blech besteht,
- der Boden der hinteren quadratischen Öffnung mit einem flexiblen Gummibalg (6) ausgestattet ist, der kontinuierlichen Durchgang für Luft sowie eine Dichtung bietet,
- über dem Ladeluftkühler, der als Sitz für den flexiblen Gummibalg (6) fungiert, ein Deckel (8) montiert ist,
- die beiden vorderen Schlitze des Luftkanals in den Kühlergrill (9) münden
- und der Kühlergrill zwei gebogene Luftführungen (10) trägt, die abwechselnd dem vorbeiströmenden Luftstrom zugewandt sind.

2. Motorraum eines Fahrzeugs mit Haube mit integriertem Luftkanal nach Anspruch 1, wobei der Körper (1) und die Verstärkungsstruktur (2) aus Metall sind.

3. Motorraum eines Fahrzeugs mit Haube mit integriertem Luftkanal nach Anspruch 1, wobei der Körper (1) und die Verstärkungsstruktur (2) aus verstärktem Kunststoff sind.

4. Motorraum eines Fahrzeugs mit Haube mit integriertem Luftkanal nach Anspruch 1, wobei der Körper (1) und die Verstärkungsstruktur (2) aus Verbundstoff sind.

5. Motorraum eines Fahrzeugs mit Haube mit integriertem Luftkanal nach Anspruch 1, wobei der Körper (1) und die Verstärkungsstruktur (2) aus einer beliebigen Kombination der Materialien nach den Ansprüchen 2, 3 und 4 gefertigt sind.

## Revendications

1. Compartiment de moteur d'un véhicule ayant un capot, un refroidisseur intermédiaire et une grille antérieure,
ledit capot comprenant:
- un corps principal (1) ayant une surface extérieure,
- une structure de renforcement (2)
- ledit corps principal (1) et ladite structure de renforcement (2) formant un passage creux (3),
- ledit passage creux (3) se comportant comme une conduite d'air intégrée dans le capot s'étendant ainsi de l'avant de la structure du véhicule jusqu'à la partie supérieure d'un refroidisseur intermédiaire (7), un moteur ou n'importe quel dispositif exigeant de l'air pour son fonctionnement normal, - une ouverture à un avant du capot, ladite ouverture se comportant comme une entrée pour introduire de l'air extérieure par ladite grille antérieure à la zone du refroidisseur intermédiaire, entrée d'air du moteur et de même,
**caractérisé en ce que**
- ladite conduite d'air intégrée ayant une extrémité avant divisée en deux fentes (4) et une extrémité arrière comme un seul carré (5),
- le côté extérieur du capot est en tôle,
- le côté inférieur de l'ouverture du carré arrière est pourvu d'un soufflet en caoutchouc flexible (6) qui fournit un passage continu pour l'air aussi bien qu'un joint,
- le refroidisseur intermédiaire a une couverture (8) montée au-dessus de cela et agit comme un logement pour ledit soufflet en caoutchouc flexible (6),
- les deux fentes antérieures de la conduite d'air s'ouvrent dans la grille antérieure (9)
- et ladite grille antérieure porte deux guides d'air incurvés (10) qui à leur tour font face au flux d'air qui avance.

2. Compartiment de moteur d'un véhicule ayant un capot avec conduite d'air intégrée selon la revendication 1, où le corps principal (1) et la structure de renforcement (2) sont construits en métal.

3. Compartiment de moteur d'un véhicule ayant un capot avec conduite d'air intégrée selon la revendication 1, où le corps principal (1) et la structure de renforcement (2) sont construits à partir de plastique renforcé.

4. Compartiment de moteur d'un véhicule ayant un capot avec conduite d'air intégrée selon la revendication 1, où le corps principal (1) et la structure de renforcement (2) sont construits en matériau composite.

5. Compartiment de moteur d'un véhicule ayant un capot avec conduite d'air intégrée selon la revendication 1, où le corps principal (1) et la structure de renforcement (2) sont construits avec n'importe quelle combinaison des matériaux des revendications 2, 3 et 4.
